# EUROPEAN PATENT APPLICATION

(11) **EP 4 365 015 A1**
(43) Date of publication of application: **08.05.2024**
(21) Application number: 22831408.4
(22) Date of filing: 27.04.2022
(51) Int. Cl.: B60L 58/14, B60L 58/13, B60L 58/10

(54) **VEHICLE CONTROL METHOD AND APPARATUS, AND VEHICLE**

(30) Priority: 28.06.2021 CN 202110722104
(71) Applicant: Beijing CHJ Information Technology Co., Ltd., Beijing 101399 (CN)
(72) Inventor: LIU, Shaokang, Beijing 101399 (CN)
(74) Representative: advotec.
(86) International application number: PCT/CN2022/089684
(87) International publication number: WO 2023/273580

(57) **Abstract**

A vehicle control method, comprising: when a vehicle is stopped and a battery low-power protection function is in an inactivated state, determining whether a vehicle power supply is in a low-power state (11); if it is determined that the vehicle power supply is in the low-power state, controlling the battery low-power protection function to enter a primary protection state (12), wherein some of the functions of the vehicle are limited under the primary protection state; and in the case that the battery low-power protection function is in the primary protection state, limiting the use of designated power consumption functions in the vehicle (13). The method can limit the use of the power consumption functions in a timely manner when the vehicle is stopped and the electric quantity of the power supply is too low, so as to avoid overdischarge of the vehicle power supply, thereby being capable of avoiding the situation that the vehicle cannot be used due to the overdischarge of the power supply, and ensuring that the vehicle can be normally used. Further disclosed are a vehicle control apparatus, a vehicle, a computer-readable storage medium, a computer program product, and a computer program.

## Description

### CROSS-REFERENCE TO RELATED APPLICATION

This application is based on and claims priority to Chinese Patent Application No. 202110722104.3, filed on June 28, 2021, the entire content of which is incorporated herein by reference.

### TECHNICAL FIELD

The disclosure relates to the field of vehicle control, and specifically to a method and an apparatus for controlling a vehicle, and a vehicle.

### BACKGROUND

A new energy vehicle is configured with more and more electronic control functions, resulting in an increasing static power consumption in the vehicle. When the vehicle is stationary, part of electronic control functions or components (for example, an intelligent direct current to direct current converter (DCDC), a sentry mode, a welcome system, a human machine interface (HMI)) may still operate. Therefore, when the vehicle has been stationary for a long period of time, since these electronic control functions or components still operate, a power battery is prone to over-discharge and the vehicle fails to start, which brings inconvenience to a driver.

### SUMMARY

The disclosure aims to provide a method and an apparatus for controlling a vehicle, and a vehicle, to achieve energy saving control for a power supply with a low electric charge quantity of a vehicle.

To achieve the above purpose, according to a first aspect of embodiments of the disclosure, a method for controlling a vehicle is provided and includes: determining whether a power supply of the vehicle is in an insufficient electric-charge-quantity state, when the vehicle is stopped and a battery low-electric-charge-quantity protection function is in a non-activated state; controlling the battery low-electric-charge-quantity protection function to enter a primary protection state, in response to determining that the power supply of the vehicle is in the insufficient electric-charge-quantity state, in which part of functions of the vehicle are limited in the primary protection state; and limiting a specified power consumption function in the vehicle not to be used, when the battery low-electric-charge-quantity protection function is in the primary protection state.

In some embodiments, determining whether the power supply of the vehicle is in the insufficient electric-charge-quantity state includes: obtaining a state of charge (SoC) of a power battery of the vehicle and a charging state of the vehicle, when the vehicle is stopped and the battery low-electric-charge-quantity protection function is in the non-activated state; and determining that the power supply of the vehicle is in the insufficient electric-charge-quantity state, in response to the SoC of the power battery being in a first low-electric-charge-quantity range and the charging state of the vehicle indicating that the vehicle is not charged.

In some embodiments, the primary protection state includes a first protection state and a second protection state, and a number of limited functions of the vehicle in the first protection state is more than a number of limited functions of the vehicle in the second protection state.

In some embodiments, the first low-electric-charge-quantity range includes a first range and a second range and an electric-charge-quantity lower limit of the first range is higher than an electric-charge-quantity upper limit of the second range; and controlling the battery low-electric-charge-quantity protection function to enter the primary protection state, in response to determining that the power supply of the vehicle is in the insufficient electric-charge-quantity state, includes: obtaining an SoC of a storage battery of the vehicle; controlling the battery low-electric-charge-quantity protection function to enter the first protection state, in response to the SoC of the power battery being within the first range and the SoC of the storage battery reaching a first electric-charge-quantity threshold; and controlling the battery low-electric-charge-quantity protection function to enter the second protection state, in response to the SoC of the power battery being within the second range and the SoC of the storage battery not reaching the first electric-charge-quantity threshold.

In some embodiments, the method further includes: when the battery low-electric-charge-quantity protection function is within the first protection state, controlling the battery low-electric-charge-quantity protection function to enter the second protection state, in response to detecting that the SoC of the storage battery is lower than the first electric-charge-quantity threshold.

In some embodiments, limiting the specified power consumption function in the vehicle not to be used when the battery low-electric-charge-quantity protection function is in the primary protection state includes: limiting a power consumption function controlled by at least one of an assisted driving domain controller, a body domain controller, or a direct current to direct current (DCDC) converter not to be used when the battery low-electric-charge-quantity protection function is in the primary protection state.

In some embodiments, limiting the power consumption function controlled by at least one of the assisted driving domain controller, the body domain controller or the DCDC converter not to be used when the primary protection state is the first protection state includes: sending a first disabling instruction to the assisted driving domain controller, to disable the power consumption function controlled by the assisted driving domain controller; sending a second disabling instruction to the body domain controller, to disable the power consumption function controlled by the body domain controller; and sending a frequency limiting instruction to the DCDC converter, to reduce a detection frequency of the DCDC converter on the storage battery of the vehicle.

In some embodiments, limiting the power consumption function controlled by at least one of the assisted driving domain controller, the body domain controller or the DCDC converter not to be used when the primary protection state is the second protection state includes: sending a first disabling instruction to the assisted driving domain controller, to disable the power consumption function controlled by the assisted driving domain controller; sending a second disabling instruction to the body domain controller, to disable the power consumption function controlled by the body domain controller; and sending a third disabling instruction to the DCDC converter, to disable a detection of the DCDC converter on the storage battery of the vehicle.

In some embodiments, the method further includes: generating and outputting a first prompt message, in which the first prompt message is configured to indicate a power consumption function that has been limited.

In some embodiments, the method further includes: determining whether the vehicle satisfies a condition for entering a protection activated state, when the battery low-electric-charge-quantity protection function is in the primary protection state, in which an electric charge quantity consumed by the vehicle in the protection activated state is lower than an electric charge quantity consumed by the vehicle in the primary protection state; and controlling the battery low-electric-charge-quantity protection function to enter the protection activated state, in response to determining that the vehicle satisfies the condition for entering the protection activated state.

In some embodiments, determining whether the vehicle satisfies the condition for entering the protection activated state includes: detecting a limit state of a specified power consumption function, in which the limit state is configured to indicate whether a limit on the specified power consumption function is successfully executed; and determining that the vehicle satisfies the condition for entering the protection activated state, in response to the limit state indicating that a limit on each specified power consumption function has been completed.

In some embodiments, determining whether the vehicle satisfies the condition for entering the protection activated state includes: starting timing when the battery low-electric-charge-quantity protection function enters the primary protection state, and obtaining a timing duration; and determining that the vehicle satisfies the condition for entering the protection activated state, in response to the timing duration reaching a preset duration.

In some embodiments, the specified function is controlled by a specified device; and the method further includes: controlling the specified device to sleep, when the battery low-electric-charge-quantity protection function is in the protection activated state.

In some embodiments, the method further includes: determining whether the vehicle satisfies a condition for existing protection, when the battery low-electric-charge-quantity protection function is in the protection activated state; and controlling the battery low-electric-charge-quantity protection function to switch from the protection activated state to the non-activated state, in response to determining that the vehicle satisfies the condition for existing protection.

In some embodiments, determining whether the vehicle satisfies the condition for exiting protection includes: determining that the vehicle satisfies the condition for existing protection, when the vehicle is powered on; or determining that the vehicle satisfies the condition for existing protection, when an SoC of a power battery is greater than a second electric-charge-quantity threshold and a charging state of the vehicle indicates that the vehicle is being charged.

According to a second aspect of embodiments of the disclosure, an apparatus for controlling a vehicle is provided. The apparatus includes: a first determining module, configured to determine whether a power supply of the vehicle is in an insufficient electric-charge-quantity state, when the vehicle is stopped and a battery low-electric-charge-quantity protection function is in a non-activated state; a first controlling module, configured to control the battery low-electric-charge-quantity protection function to enter a primary protection state, in response to determining that the power supply of the vehicle is in the insufficient electric-charge-quantity state, in which part of functions of the vehicle are limited in the primary protection state; and a second controlling module, configured to limit a specified power consumption function in the vehicle not to be used, when the battery low-electric-charge-quantity protection function is in the primary protection state.

According to a third aspect of embodiments of the disclosure, a vehicle is provided and includes an assisted driving domain controller, a body domain controller, a DCDC converter, and a power domain controller, in which the power domain controller is configured to perform the method of any one of embodiments of the first aspect.

According to a fourth aspect of embodiments of the disclosure, a computer-readable storage medium with a computer program stored thereon is provided, in which when the program is executed by a processor, the method of any one of embodiments of the first aspect is performed.

According to a fifth aspect of embodiments of the disclosure, a computer program product including a computer program code is provided. When the computer program code is running on a computer, the method of any one of embodiments of the first aspect is performed.

According to a sixth aspect of embodiments of the disclosure, a computer program including a computer program code is provided. When the computer program code is running on a computer, the computer is caused to perform the method of any one of embodiments of the first aspect.

Based on the technical solutions, when the vehicle is stopped and the battery low-electric-charge-quantity protection function is in the non-activated state, whether the power supply of the vehicle is in the insufficient electric-charge-quantity state is determined; the battery low-electric-charge-quantity protection function is controlled to enter the primary protection state, when it is determine that the power supply of the vehicle is in the insufficient electric-charge-quantity state; and the specified power consumption function in the vehicle is limited not to be used, when the battery low-electric-charge-quantity protection function is in the primary protection state. Part of functions of the vehicle are limited in the primary protection state. Thus, when the vehicle is parked and the electric charge quantity is too low, the power consumption function may be limited not to be used in time, over-discharge of the power supply of the vehicle may be avoided, and further the situation that is unable to use the vehicle, caused due to over-discharge of the power supply, may be avoided, to ensure that the vehicle may be used normally.

Other features and advantages of the disclosure are described in detail in the subsequent detailed description.

### BRIEF DESCRIPTION OF THE DRAWINGS

Attached drawings are provided for the further understanding of the disclosure, constitute a part of the description, and are used to explain the disclosure along with the following implementations, but may not constitute a limitation of the disclosure. In the attached drawings,
FIG. 1 is a flowchart illustrating a method for controlling a vehicle provided in an implementation of the disclosure.
FIG. 2 is a flowchart illustrating a method for controlling a vehicle provided in another implementation of the disclosure.
FIG. 3 is a block diagram illustrating an apparatus for controlling a vehicle provided in an implementation of the disclosure.

### DETAILED DESCRIPTION

Implementations of the disclosure will be described in combination with the attached drawings. It should be understood that, implementations described herein are merely to explain the disclosure, rather than a limitation of the disclosure.

Before solutions of the disclosure are introduced, related concepts and hardware involved in the disclosure will be briefly described.

A power domain controller is used to control a power system and a transmission system of a vehicle and integrates power on/off control, vehicle energy management, vehicle malfunction management, vehicle torque control, power battery management, charge control, drive motor control, range extender control, transmission control, and other functions.

An assisted driving domain controller is used to control a driver assistant system of the vehicle and integrates advanced driving assistance functions such as adaptive cruise, lane keeping, pilot assistance, automatic parking, remote parking, automatic valet parking, automatic emergency braking, sentry mode, and the like.

A body domain controller is used to control a body system and integrates functions such as electric windows, electric rearview mirrors, air conditioning, headlights, turn signal lamps, a defrosting device, an anti-theft system, a power mode, central control door locks, a welcome system, and the like.

An intelligent direct current to direct current (DCDC) converter may detect a voltage/state of charge (SoC) of a low-voltage storage battery when a vehicle is powered off. If the voltage/SoC of the low-voltage storage battery is low, the intelligent DCDC may wake up a vehicle control unit (VCU), the VCU controls the vehicle to power on in high voltage, and the power battery may charge the low-voltage storage battery via the intelligent DCDC, to ensure that the vehicle may start normally.

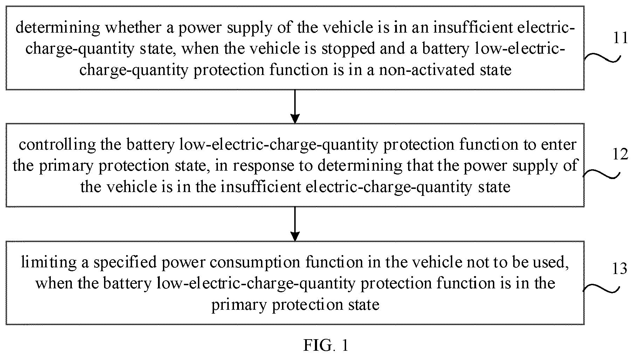

FIG. 1 is a flowchart illustrating a method for controlling a vehicle provided in an implementation of the disclosure. In some embodiments, the method provided in embodiments of the disclosure is applicable to the power domain controller of the vehicle.

As illustrated in FIG. 1, the method may include the following steps.

At step 11, when the vehicle is stopped and a battery low-electric-charge-quantity protection function is in a non-activated state, whether a power supply of the vehicle is in an insufficient electric-charge-quantity state is determined.

At step 12, the battery low-electric-charge-quantity protection function is controlled to enter a primary protection state, in response to determining that the power supply of the vehicle is in the insufficient electric-charge-quantity state.

At step 13, a specified power consumption function in the vehicle is limited not to be used, when the battery low-electric-charge-quantity protection function is in the primary protection state.

Part of functions of the vehicle are limited in the primary protection state.

In the solutions of the disclosure, there are three states for the battery low-electric-charge-quantity protection function of the vehicle, which are a non-activated state, a primary protection state and a protection activated state, respectively. In the non-activated state, the battery low-electric-charge-quantity protection function of the vehicle may not come into effect. The battery low-electric-charge-quantity protection function may change from the non-activated state to the primary protection state when it is detected that the power supply of the vehicle is in the insufficient electric-charge-quantity state. The specified power consumption function may be limited in the primary protection state and a preliminary measure may be taken to prevent the power battery from over-discharge. The primary protection state may be considered as a transition state entering the protection activated state. A switching mode between the primary protection state and the protection activated state will be given later and will not be elaborated herein.

Based on the technical solutions, when the vehicle is stopped and the battery low-electric-charge-quantity protection function is in the non-activated state, whether the power supply of the vehicle is in the insufficient electric-charge-quantity state is determined; the battery low-electric-charge-quantity protection function is controlled to enter the primary protection state, when it is determine that the power supply of the vehicle is in the insufficient electric-charge-quantity state; and the specified power consumption function in the vehicle is limited not to be used, when the battery low-electric-charge-quantity protection function is in the primary protection state. Part of functions of the vehicle are limited in the primary protection state. Thus, when the vehicle is parked and the electric charge quantity is too low, the power consumption function may be limited not to be used in time, over-discharge of the power supply of the vehicle may be avoided, and further the situation that is unable to use the vehicle, caused due to over-discharge of the power supply, may be avoided, to ensure that the vehicle may be used normally.

Steps of the disclosure will be described below.

At step 11, when the vehicle is stopped and the battery low-electric-charge-quantity protection function is in the non-activated state, whether the power supply of the vehicle is in the insufficient electric-charge-quantity state is determined.

Whether or not the vehicle is stopped may be determined by a power supply mode of the vehicle, that is, when the power supply mode of the vehicle is in an OFF gear, it is deemed that the vehicle is stopped.

In an implementation of the disclosure, step 11 may include:
obtaining an SoC of a power battery of the vehicle and a charging state of the vehicle, when the vehicle is stopped and the battery low-electric-charge-quantity protection function is in the non-activated state; and
determining that the power supply of the vehicle is in the insufficient electric-charge-quantity state, in response to the SoC of the power battery being in a first low-electric-charge-quantity range and the charging state of the vehicle indicating that the vehicle is not charged.

The first low-electric-charge-quantity range is set according to actual requirements, for example, it may be set less than 10%.

That is, when the battery low-electric-charge-quantity protection function is in the non-activated state, the vehicle is stopped, the SoC of the power battery of the vehicle is low, and the vehicle is not charged, it may be determined that the power supply of the vehicle is in the insufficient electric-charge-quantity state.

At step 12, the battery low-electric-charge-quantity protection function is controlled to enter the primary protection state, in response to determining that the vehicle is in the insufficient electric-charge-quantity state.

In embodiments of the disclosure, the primary protection state may be further divided into two different states. That is, the primary protection state may include a first protection state and a second protection state and a number of limited functions of the vehicle in the first protection state is more than a number of limited functions of the vehicle in the second protection state.

In the embodiments, the first low-electric-charge-quantity range may include a first range and a second range and an electric-charge-quantity lower limit of the first range is higher than an electric-charge-quantity upper limit of the second range. Correspondingly, step 12 may include:
obtaining an SoC of a storage battery of the vehicle;
controlling the battery low-electric-charge-quantity protection function to enter the first protection state, in response to the SoC of the power battery being within the first range and the SoC of the storage battery reaching a first electric-charge-quantity threshold; and
controlling the battery low-electric-charge-quantity protection function to enter the second protection state, in response to the SoC of the power battery being within the second range and the SoC of the storage battery not reaching the first electric-charge-quantity threshold.

The first range and the second range may be freely set according to actual requirements. In some embodiments, the first range may be [5%, 10%] and the second range may be less than 5%.

The first electric-charge-quantity threshold may be configured according to actual requirements. In some embodiments, the first electric-charge-quantity threshold may be 40%.

When the SoC of the power battery is within the first range and the SoC of the storage battery reaches (that is, greater than or equal to) the first electric-charge-quantity threshold, it indicates that the SoC of the power battery and the SoC of the storage battery (low-voltage storage battery) of the vehicle are relatively low, but do not reach an extreme low state. Therefore, the battery low-electric-charge-quantity protection function may be controlled to enter the first protection state.

When the SoC of the power battery is within the second range and the SoC of the storage battery does not reach (that is, less than) the first electric-charge-quantity threshold, it indicates that the SoC of the power battery and the SoC of the storage battery (low-voltage storage battery) of the vehicle are extremely low. Therefore, the battery low-electric-charge-quantity protection function may be controlled to enter the second protection state.

Since an overall electric charge quantity of the power supply when the vehicle enters the first protection state is higher than an overall electric charge quantity of the power supply when the vehicle enters the second protection state, a function limitation degree of the vehicle in the second protection state is much higher than a function limitation degree of the vehicle in the first protection state, that is, a number of limited functions of the vehicle in the first protection state is more than a number of limited functions of the vehicle in the second protection state.

In addition, when the battery low-electric-charge-quantity protection function is in the first protection state, the battery low-electric-charge-quantity protection function may be controlled to enter the second protection state, in response to detecting that the SoC of the storage battery is lower than the first electric-charge-quantity threshold.

At step 13, the specified power consumption function in the vehicle may be limited not to be used, when the battery low-electric-charge-quantity protection function enters the primary protection state.

In an implementation of the disclosure, step 13 may include:
limiting a power consumption function controlled by at least one of an assisted driving domain controller, a body domain controller, or a DCDC converter not to be used when the battery low-electric-charge-quantity protection function is in the primary protection state.

In some embodiments, limiting the power consumption function not to be used may include reducing a function use efficiency or disabling a function.

The power consumption function controlled by the assisted driving domain controller may include but not limited to: sentry mode, remote driving, remote parking, and automatic valet parking.

The power consumption function controlled by the body domain controller may include but not limited to central control door locks and welcome system.

The power consumption function controlled by the DCDC converter may include detection on the SoC of the storage battery of the vehicle.

In embodiments of the disclosure, limiting the power consumption function controlled by at least one of the assisted driving domain controller, the body domain controller or the DCDC converter not to be used when the primary protection state is the first protection state (that is, the battery low-electric-charge-quantity protection function is in the first protection state) may include:
sending a first disabling instruction to the assisted driving domain controller, to disable the power consumption function controlled by the assisted driving domain controller;
sending a second disabling instruction to the body domain controller, to disable the power consumption function controlled by the body domain controller; and
sending a frequency limiting instruction to the DCDC converter, to reduce a detection frequency of the DCDC converter on the storage battery of the vehicle.

When the battery low-electric-charge-quantity protection function is in the first protection state, the power consumption function controlled by the assisted driving domain controller and the power consumption function controlled by the body domain controller may be disabled, to reduce the power consumption of the power supply of the vehicle. At the same time, since the power supply of the vehicle still has some SOC, and the DC-DC converter is configured to detect relevant power consumption parameter information of the battery, the DC-DC converter may not be disabled temporarily, but only limits its detection frequency.

In embodiments of the disclosure, limiting the power consumption function controlled by at least one of the assisted driving domain controller, the body domain controller or the DCDC converter not to be used when the primary protection state is the second protection state (that is, the battery low-electric-charge-quantity protection function of the vehicle is in the second protection state) may include:
sending a first disabling instruction to the assisted driving domain controller, to disable the power consumption function controlled by the assisted driving domain controller;
sending a second disabling instruction to the body domain controller, to disable the power consumption function controlled by the body domain controller; and
sending a third disabling instruction to the DCDC converter, to disable a detection of the DCDC converter on the storage battery of the vehicle.

When the battery low-electric-charge-quantity protection function is in the second protection state, the power consumption function controlled by the assisted driving domain controller and the power consumption function controlled by the body domain controller may be disabled, to reduce the power consumption of the power supply of the vehicle. At the same time, since the SoC of the power supply of the vehicle is very low, it's not necessary to detect the storage battery by the DCDC converter, and detection of the DCDC converter may be directly disabled.

In some embodiments, the method provided in embodiments of the disclosure may further include:
generating and outputting a first prompt message.

The first prompt message is configured to indicate a power consumption function that has been limited. In some embodiments, the first prompt message may be output on a human machine interface (HMI) of the vehicle.

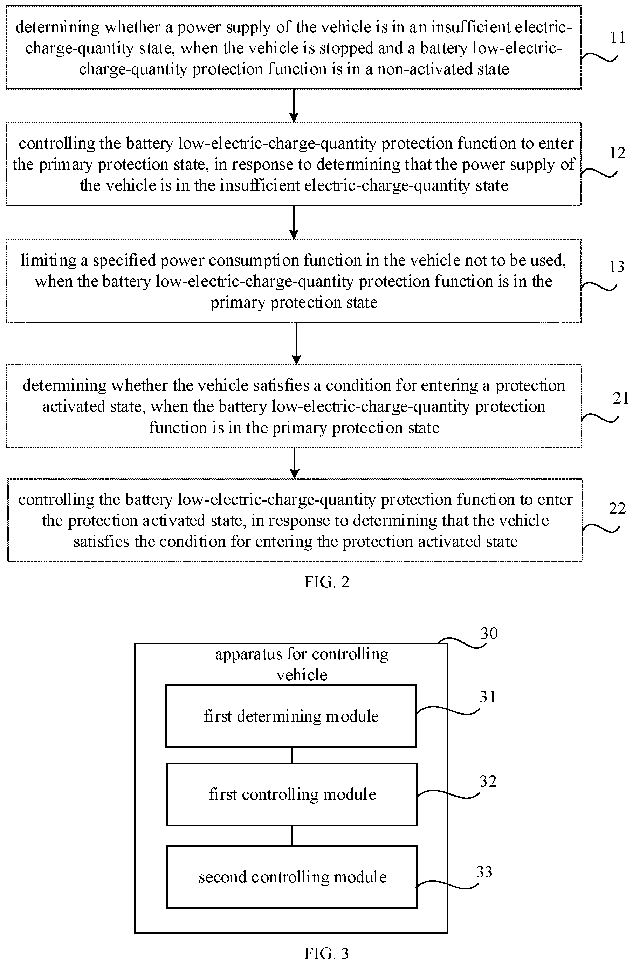

FIG. 2 is a flowchart illustrating a method for controlling a vehicle provided in another implementation of the disclosure. On the basis of steps as illustrated in FIG. 1, the method provided in embodiments of the disclosure may further include following steps.

At step 21, when the battery low-electric-charge-quantity protection function is in the primary protection state, whether the vehicle satisfies a condition for entering a protection activated state is determined.

At step 22, the battery low-electric-charge-quantity protection function is controlled to enter the protection activated state, in response to determining that the vehicle satisfies the condition for entering the protection activated state.

An electric charge quantity consumed by the vehicle in the protection activated state is lower than an electric charge quantity consumed by the vehicle in the primary protection state. That is, when the vehicle is in the protection activated state, a more efficient measure may be adopted compared with when the vehicle is in the primary protection state, to reduce the power consumption of the power supply of the vehicle.

In some embodiments, determining whether the vehicle satisfies the condition for entering the protection activated state may include:
detecting a limit state of a specified power consumption function; and
determining that the vehicle satisfies the condition for entering the protection activated state, in response to the limit state indicating that a limit on each specified power consumption function has been completed.

The limit state is configured to indicate whether the limit on the specified power consumption function is successfully executed, that is, whether the specified power consumption function has been stopped to consume power.

For another example, determining whether the vehicle satisfies the condition for entering the protection activated state may include:
starting timing when the battery low-electric-charge-quantity protection function enters the primary protection state, and obtaining a timing duration; and
determining that the vehicle satisfies the condition for entering the protection activated state, in response to the timing duration reaching a preset duration.

In some embodiments, the method provided in embodiments of the disclosure may further include:
controlling the specified device to sleep, when the battery low-electric-charge-quantity protection function is in the protection activated state.

The specified function is controlled by the specified device. In some embodiments, the specified device may include but not limited to at least one of the assisted driving domain controller, the body domain controller or the DCDC converter. The step is actually controlling the assisted driving domain controller, the body domain controller or the DCDC converter to sleep. At the same time, the HMI function may be further controlled to sleep.

In some embodiments, on the basis of steps as illustrated in FIG. 2, the method provided in embodiments of the disclosure may further include:
determining whether the vehicle satisfies a condition for existing protection, when the battery low-electric-charge-quantity protection function is in the protection activated state; and
controlling the battery low-electric-charge-quantity protection function to switch from the protection activated state to the non-activated state, in response to determining that the vehicle satisfies the condition for existing protection.

In some embodiments, whether the vehicle satisfies the condition for exiting protection may be determined by the following conditions.

It is determined that the vehicle satisfies the condition for existing protection, when the vehicle is powered on.

For another example, whether the vehicle satisfies the condition for exiting protection may be determined in the following way.

It is determined that the vehicle satisfies the condition for existing protection, when an SoC of a power battery is greater than a second electric-charge-quantity threshold and a charging state of the vehicle indicates that the vehicle is being charged.

When the power battery in the low electric-charge-quantity protection state, the condition for exiting the protection activated state may be determined based on a power-on condition, an electric charge quantity and a charging condition of the vehicle, and the protection activated state may be exited in time, to achieve control of the battery low-electric-charge-quantity protection function more flexibly.

FIG. 3 is a block diagram illustrating an apparatus for controlling a vehicle provided in an implementation of the disclosure. As illustrated in FIG. 3, the apparatus 30 may include a first determining module 31, a first controlling module 32, and a second controlling module 33.

The first determining module 31 is configured to determine whether a power supply of the vehicle is in an insufficient electric-charge-quantity state, when the vehicle is stopped and a battery low-electric-charge-quantity protection function is in a non-activated state.

The first controlling module 32 is configured to control the battery low-electric-charge-quantity protection function to enter a primary protection state, in response to determining that the power supply of the vehicle is in the insufficient electric-charge-quantity state. Part of functions of the vehicle are limited in the primary protection state.

The second controlling module 33 is configured to limit a specified power consumption function in the vehicle not to be used, when the battery low-electric-charge-quantity protection function is in the primary protection state.

In some embodiments, the first determining module 31 includes a first obtaining submodule and a first determining submodule.

The first obtaining submodule is configured to obtain an SoC of a power battery of the vehicle and a charging state of the vehicle, when the vehicle is stopped and the battery low-electric-charge-quantity protection function is in the non-activated state.

The first determining submodule is configured to determine that the power supply of the vehicle is in the insufficient electric-charge-quantity state, in response to the SoC of the power battery being in a first low-electric-charge-quantity range and the charging state of the vehicle indicating that the vehicle is not charged.

In some embodiments, the primary protection state includes a first protection state and a second protection state and a number of limited functions of the vehicle in the first protection state is more than a number of limited functions of the vehicle in the second protection state.

In some embodiments, the first low-electric-charge-quantity range includes a first range and a second range and an electric-charge-quantity lower limit of the first range is higher than an electric-charge-quantity upper limit of the second range.

The first controlling module 32 includes a second obtaining submodule, a first controlling submodule, and a second controlling submodule.

The second obtaining submodule is configured to obtain an SoC of a storage battery of the vehicle.

The first controlling submodule is configured to control the battery low-electric-charge-quantity protection function to enter the first protection state, in response to the SoC of the power battery being within the first range and the SoC of the storage battery reaching a first electric-charge-quantity threshold.

The second controlling submodule is configured to control the battery low-electric-charge-quantity protection function to enter the second protection state, in response to the SoC of the power battery being within the second range and the SoC of the storage battery not reaching the first electric-charge-quantity threshold.

In some embodiments, the apparatus 30 further includes a third controlling module.

The third control module is configured to, when the battery low-electric-charge-quantity protection function is within the first protection state, control the battery low-electric-charge-quantity protection function to enter the second protection state, in response to detecting that the SoC of the storage battery is lower than the first electric-charge-quantity threshold.

In some embodiments, the second controlling module 33 includes a third controlling submodule.

The third controlling submodule is configured to limit a power consumption function controlled by at least one of an assisted driving domain controller, a body domain controller, or a DCDC converter not to be used when the battery low-electric-charge-quantity protection function is in the primary protection state.

In some embodiments, the third controlling submodule includes a first sending submodule, a second sending submodule, and a third sending submodule.

The first sending submodule is configured to send a first disabling instruction to the assisted driving domain controller, to disable the power consumption function controlled by the assisted driving domain controller, when the primary protection state is the first protection state.

The second sending submodule is configured to send a second disabling instruction to the body domain controller, to disable the power consumption function controlled by the body domain controller.

The third sending submodule is configured to send a frequency limiting instruction to the DCDC converter, to reduce a detection frequency of the DCDC converter on the storage battery of the vehicle.

In some embodiments, the third controlling submodule includes a first sending submodule, a second sending submodule, and a fourth sending submodule.

The first sending submodule is configured to send a first disabling instruction to the assisted driving domain controller, to disable the power consumption function controlled by the assisted driving domain controller, when the primary protection state is the second protection state.

The second sending submodule is configured to send a second disabling instruction to the body domain controller, to disable the power consumption function controlled by the body domain controller.

The fourth sending submodule is configured to send a third disabling instruction to the DCDC converter, to disable a detection of the DCDC converter on the storage battery of the vehicle.

In some embodiments, the apparatus 30 further includes an output module.

The output module is configured to generate and output a first prompt message. The first prompt message is configured to indicate a power consumption function that has been limited.

In some embodiments, the apparatus 30 further includes a second determining module and a fourth controlling module.

The second determining module is configured to determine whether the vehicle satisfies a condition for entering a protection activated state, when the battery low-electric-charge-quantity protection function is in the primary protection state. An electric charge quantity consumed by the vehicle in the protection activated state is lower than an electric charge quantity consumed by the vehicle in the primary protection state.

The fourth controlling module is configured to control the battery low-electric-charge-quantity protection function to enter the protection activated state, in response to determining that the vehicle satisfies the condition for entering the protection activated state.

In some embodiments, the second determining module includes a detection submodule and a second determining submodule.

The detection submodule is configured to detect a limit state of a specified power consumption function. The limit state is configured to indicate whether a limit on the specified power consumption function is successfully executed.

The second determining submodule is configured to determine that the vehicle satisfies the condition for entering the protection activated state, in response to the limit state indicating that a limit on each specified power consumption function has been completed.

In some embodiments, the second determining module includes a timing submodule and a third determining submodule.

The timing submodule is configured to start timing when the battery low-electric-charge-quantity protection function enters the primary protection state, and obtain a timing duration.

The third determining submodule is configured to determine that the vehicle satisfies the condition for entering the protection activated state, in response to the timing duration reaching a preset duration.

In some embodiments, the specified function is controlled by a specified device.

The apparatus 30 further includes a fifth controlling module.

The fifth controlling module is configured to control the specified device to sleep, when the battery low-electric-charge-quantity protection function is in the protection activated state.

In some embodiments, the apparatus 30 further includes a third determining module and a sixth controlling module.

The third determining module is configured to determine whether the vehicle satisfies a condition for existing protection, when the battery low-electric-charge-quantity protection function is in the protection activated state.

The sixth controlling module is configured to control the battery low-electric-charge-quantity protection function to switch from the protection activated state to the non-activated state, in response to determining that the vehicle satisfies the condition for existing protection.

In some embodiments, the third determining module includes a fourth determining submodule or a fifth determining submodule.

The fourth determining submodule is configured to determine that the vehicle satisfies the condition for existing protection, when the vehicle is powered on.

The fifth determining submodule is configured to determine that the vehicle satisfies the condition for existing protection, when an SoC of a power battery is greater than a second electric-charge-quantity threshold and a charging state of the vehicle indicates that the vehicle is being charged.

With regards to the apparatuses in the above embodiments, the specific manners for performing operations for individual modules therein have been described in detail in the embodiments regarding the method, which will not be elaborated herein.

According to embodiments of the disclosure, a vehicle is provided and includes an assisted driving domain controller, a body domain controller, a DCDC converter, and a power domain controller. The power domain controller is configured to perform the method for controlling a vehicle in any one of embodiments of the disclosure.

In some embodiments of the disclosure, the power domain controller is specifically configured to: determine whether a power supply of the vehicle is in an insufficient electric-charge-quantity state, when the vehicle is stopped and a battery low-electric-charge-quantity protection function is in a non-activated state; control the battery low-electric-charge-quantity protection function to enter a primary protection state, in response to determining that the power supply of the vehicle is in the insufficient electric-charge-quantity state, in which part of functions of the vehicle are limited in the primary protection state; and limit a specified power consumption function in the vehicle not to be used, when the battery low-electric-charge-quantity protection function is in the primary protection state.

In some embodiments of the disclosure, the power domain controller is configured to: obtain an SoC of a power battery of the vehicle and a charging state of the vehicle, when the vehicle is stopped and the battery low-electric-charge-quantity protection function is in the non-activated state; and determine that the power supply of the vehicle is in the insufficient electric-charge-quantity state, in response to the SoC of the power battery being in a first low-electric-charge-quantity range and the charging state of the vehicle indicating that the vehicle is not charged.

In some embodiments of the disclosure, the primary protection state includes a first protection state and a second protection state and a number of limited functions of the vehicle in the first protection state is more than a number of limited functions of the vehicle in the second protection state.

In some embodiments of the disclosure, the first low-electric-charge-quantity range includes a first range and a second range and an electric-charge-quantity lower limit of the first range is higher than an electric-charge-quantity upper limit of the second range. The power domain controller is configured to: obtain an SoC of a storage battery of the vehicle; control the battery low-electric-charge-quantity protection function to enter the first protection state, in response to the SoC of the power battery being within the first range and the SoC of the storage battery reaching a first electric-charge-quantity threshold; and control the battery low-electric-charge-quantity protection function to enter the second protection state, in response to the SoC of the power battery being within the second range and the SoC of the storage battery not reaching the first electric-charge-quantity threshold.

In some embodiments of the disclosure, the power domain controller is configured to: when the battery low-electric-charge-quantity protection function is within the first protection state, control the battery low-electric-charge-quantity protection function to enter the second protection state, in response to detecting that the SoC of the storage battery is lower than the first electric-charge-quantity threshold.

In some embodiments of the disclosure, the power domain controller is configured to: limit a power consumption function controlled by at least one of an assisted driving domain controller, a body domain controller, or a DCDC converter not to be used when the battery low-electric-charge-quantity protection function is in the primary protection state.

In some embodiments of the disclosure, limiting the power consumption function controlled by at least one of the assisted driving domain controller, the body domain controller or the DCDC converter not to be used when the primary protection state is the first protection state includes: sending a first disabling instruction to the assisted driving domain controller, to disable the power consumption function controlled by the assisted driving domain controller; sending a second disabling instruction to the body domain controller, to disable the power consumption function controlled by the body domain controller; and sending a frequency limiting instruction to the DCDC converter, to reduce a detection frequency of the DCDC converter on the storage battery of the vehicle.

In some embodiments of the disclosure, limiting the power consumption function controlled by at least one of the assisted driving domain controller, the body domain controller or the DCDC converter not to be used when the primary protection state is the second protection state includes: sending a first disabling instruction to the assisted driving domain controller, to disable the power consumption function controlled by the assisted driving domain controller; sending a second disabling instruction to the body domain controller, to disable the power consumption function controlled by the body domain controller; and sending a third disabling instruction to the DCDC converter, to disable a detection of the DCDC converter on the storage battery of the vehicle.

In some embodiments of the disclosure, the power domain controller is configured to: generate and output a first prompt message. The first prompt message is configured to indicate a power consumption function that has been limited.

In some embodiments of the disclosure, the power domain controller is configured to: determine whether the vehicle satisfies a condition for entering a protection activated state, when the battery low-electric-charge-quantity protection function is in the primary protection state, in which an electric charge quantity consumed by the vehicle in the protection activated state is lower than an electric charge quantity consumed by the vehicle in the primary protection state; and control the battery low-electric-charge-quantity protection function to enter the protection activated state, in response to determining that the vehicle satisfies the condition for entering the protection activated state.

In some embodiments of the disclosure, the power domain controller is configured to: detect a limit state of a specified power consumption function, in which the limit state is configured to indicate whether a limit on the specified power consumption function is successfully executed; and determine that the vehicle satisfies the condition for entering the protection activated state, in response to the limit state indicating that a limit on each specified power consumption function has been completed.

In some embodiments of the disclosure, the power domain controller is configured to: start timing when the battery low-electric-charge-quantity protection function enters the primary protection state, and obtain a timing duration; and determine that the vehicle satisfies the condition for entering the protection activated state, in response to the timing duration reaching a preset duration.

In some embodiments of the disclosure, the specified function is controlled by a specified device.

The power domain controller is configured to: control the specified device to sleep, when the battery low-electric-charge-quantity protection function is in the protection activated state.

In some embodiments of the disclosure, the power domain controller is configured to: determine whether the vehicle satisfies a condition for existing protection, when the battery low-electric-charge-quantity protection function is in the protection activated state; and control the battery low-electric-charge-quantity protection function to switch from the protection activated state to the non-activated state, in response to determining that the vehicle satisfies the condition for existing protection.

In some embodiments of the disclosure, the power domain controller is configured to: determine that the vehicle satisfies the condition for existing protection, when the vehicle is powered on; or determine that the vehicle satisfies the condition for existing protection, when an SoC of a power battery is greater than a second electric-charge-quantity threshold and a charging state of the vehicle indicates that the vehicle is being charged.

According to embodiments of the disclosure, a computer-readable storage medium with a computer program stored thereon is further provided. When the program is executed by a processor, the method for controlling a vehicle in any one of the above embodiments is performed.

According to embodiments of the disclosure, a computer program product including a computer program code is further provided. When the computer program code is running on a computer, the method for controlling a vehicle in any one of the above embodiments is performed.

According to embodiments of the disclosure, a computer program including a computer program code is further provided. When the computer program code is running on a computer, the computer is caused to perform the method for controlling a vehicle in any one of the above embodiments.

Implementations of the disclosure are described above in combination with the attached drawings but the disclosure is not limited to specific details in the above implementations. Various simple variations may be made on the technical solutions of the disclosure within the technical idea of the disclosure and belong to the protection scope of the disclosure.

In addition, it should be noted that, specific technical features described in the above implementations may be combined in any suitable manner without contradiction. In order to avoid unnecessary repetition, various possible combinations will not be described separately in the disclosure.

In addition, any combination among different implementations of the disclosure may be made, as long as it does not violate the idea of the disclosure, and shall be regarded as content of the disclosure.

All embodiments of the disclosure may be executed separately or in combination with other embodiments, which are deemed within a protection scope of the disclosure.

## Claims

1. A method for controlling a vehicle, comprising:
determining whether a power supply of the vehicle is in an insufficient electric-charge-quantity state, when the vehicle is stopped and a battery low-electric-charge-quantity protection function is in a non-activated state;
controlling the battery low-electric-charge-quantity protection function to enter a primary protection state, in response to determining that the power supply of the vehicle is in the insufficient electric-charge-quantity state, wherein part of functions of the vehicle are limited in the primary protection state; and
limiting a specified power consumption function in the vehicle not to be used, when the battery low-electric-charge-quantity protection function is in the primary protection state.

2. The method according to claim 1, wherein determining whether the power supply of the vehicle is in the insufficient electric-charge-quantity state comprises:
obtaining a state of charge (SoC) of a power battery of the vehicle and a charging state of the vehicle, when the vehicle is stopped and the battery low-electric-charge-quantity protection function is in the non-activated state; and
determining that the power supply of the vehicle is in the insufficient electric-charge-quantity state, in response to the SoC of the power battery being in a first low-electric-charge-quantity range and the charging state of the vehicle indicating that the vehicle is not charged.

3. The method according to claim 1 or 2, wherein the primary protection state comprises a first protection state and a second protection state, and a number of limited functions of the vehicle in the first protection state is more than a number of limited functions of the vehicle in the second protection state.

4. The method according to claim 3, wherein the first low-electric-charge-quantity range comprises a first range and a second range and an electric-charge-quantity lower limit of the first range is higher than an electric-charge-quantity upper limit of the second range; and
controlling the battery low-electric-charge-quantity protection function to enter the primary protection state, in response to determining that the power supply of the vehicle is in the insufficient electric-charge-quantity state, comprises:
obtaining a state of charge (SoC) of a storage battery of the vehicle;
controlling the battery low-electric-charge-quantity protection function to enter the first protection state, in response to the SoC of the power battery being within the first range and the SoC of the storage battery reaching a first electric-charge-quantity threshold; and
controlling the battery low-electric-charge-quantity protection function to enter the second protection state, in response to the SoC of the power battery being within the second range and the SoC of the storage battery not reaching the first electric-charge-quantity threshold.

5. The method according to claim 4, further comprising:
when the battery low-electric-charge-quantity protection function is within the first protection state, controlling the battery low-electric-charge-quantity protection function to enter the second protection state, in response to detecting that the SoC of the storage battery is lower than the first electric-charge-quantity threshold.

6. The method according to any one of claims 1 to 5, wherein limiting the specified power consumption function in the vehicle not to be used when the battery low-electric-charge-quantity protection function is in the primary protection state comprises:
limiting a power consumption function controlled by at least one of an assisted driving domain controller, a body domain controller, or a direct current to direct current (DCDC) converter not to be used when the battery low-electric-charge-quantity protection function is in the primary protection state.

7. The method according to claim 6, wherein limiting the power consumption function controlled by at least one of the assisted driving domain controller, the body domain controller or the DCDC converter not to be used when the primary protection state is the first protection state comprises:
sending a first disabling instruction to the assisted driving domain controller, to disable the power consumption function controlled by the assisted driving domain controller;
sending a second disabling instruction to the body domain controller, to disable the power consumption function controlled by the body domain controller; and
sending a frequency limiting instruction to the DCDC converter, to reduce a detection frequency of the DCDC converter on the storage battery of the vehicle.

8. The method according to claim 6, wherein limiting the power consumption function controlled by at least one of the assisted driving domain controller, the body domain controller or the DCDC converter not to be used when the primary protection state is the second protection state comprises:
sending a first disabling instruction to the assisted driving domain controller, to disable the power consumption function controlled by the assisted driving domain controller;
sending a second disabling instruction to the body domain controller, to disable the power consumption function controlled by the body domain controller; and
sending a third disabling instruction to the DCDC converter, to disable a detection of the DCDC converter on the storage battery of the vehicle.

9. The method according to any one of claims 1 to 8, further comprising:
generating and outputting a first prompt message, wherein the first prompt message is configured to indicate a power consumption function that has been limited.

10. The method according to any one of claims 1 to 9, further comprising:
determining whether the vehicle satisfies a condition for entering a protection activated state, when the battery low-electric-charge-quantity protection function is in the primary protection state, wherein an electric charge quantity consumed by the vehicle in the protection activated state is lower than an electric charge quantity consumed by the vehicle in the primary protection state; and
controlling the battery low-electric-charge-quantity protection function to enter the protection activated state, in response to determining that the vehicle satisfies the condition for entering the protection activated state.

11. The method according to claim 10, wherein determining whether the vehicle satisfies the condition for entering the protection activated state comprises:
detecting a limit state of a specified power consumption function, wherein the limit state is configured to indicate whether a limit on the specified power consumption function is successfully executed; and
determining that the vehicle satisfies the condition for entering the protection activated state, in response to the limit state indicating that a limit on each specified power consumption function has been completed.

12. The method according to claim 10, wherein determining whether the vehicle satisfies the condition for entering the protection activated state comprises:
starting timing when the battery low-electric-charge-quantity protection function enters the primary protection state, and obtaining a timing duration; and
determining that the vehicle satisfies the condition for entering the protection activated state, in response to the timing duration reaching a preset duration.

13. The method according to any one of claims 10 to 12, wherein the specified function is controlled by a specified device; and
the method further comprises:
controlling the specified device to sleep, when the battery low-electric-charge-quantity protection function is in the protection activated state.

14. The method according to any one of claims 10 to 13, further comprising:
determining whether the vehicle satisfies a condition for existing protection, when the battery low-electric-charge-quantity protection function is in the protection activated state; and
controlling the battery low-electric-charge-quantity protection function to switch from the protection activated state to the non-activated state, in response to determining that the vehicle satisfies the condition for existing protection.

15. The method according to claim 14, wherein determining whether the vehicle satisfies the condition for exiting protection comprises:
determining that the vehicle satisfies the condition for existing protection, when the vehicle is powered on; or
determining that the vehicle satisfies the condition for existing protection, when a state of charge (SoC) of a power battery is greater than a second electric-charge-quantity threshold and a charging state of the vehicle indicates that the vehicle is being charged.

16. An apparatus for controlling a vehicle, comprising:
a first determining module, configured to determine whether a power supply of the vehicle is in an insufficient electric-charge-quantity state, when the vehicle is stopped and a battery low-electric-charge-quantity protection function is in a non-activated state;
a first controlling module, configured to control the battery low-electric-charge-quantity protection function to enter a primary protection state, in response to determining that the power supply of the vehicle is in the insufficient electric-charge-quantity state, wherein part of functions of the vehicle are limited in the primary protection state; and
a second controlling module, configured to limit a specified power consumption function in the vehicle not to be used, when the battery low-electric-charge-quantity protection function is in the primary protection state.

17. A vehicle, comprising: an assisted driving domain controller, a body domain controller, a direct current to direct current (DCDC) converter, and a power domain controller, wherein the power domain controller is configured to perform the method of any one of claims 1 to 15.

18. A computer-readable storage medium with a computer program stored thereon, wherein when the program is executed by a processor, the method of any one of claims 1 to 15 is implemented.

19. A computer program product, comprising a computer program code, wherein when the computer program code is running on a computer, the method of any one of claims 1 to 15 is performed.

20. A computer program, comprising a computer program code, wherein when the computer program code is running on a computer, the computer is caused to perform the method of any one of claims 1 to 15.
